Europäisches Patentamt

(19) European Patent Office

Office européen des brevets

(11) Publication number: **0 209 294**
**A2**

## (12) EUROPEAN PATENT APPLICATION

(21) Application number: **86305108.2**

(22) Date of filing: **01.07.86**

(51) Int. Cl.⁴: **C 08 L 23/04**
// (C08L23/04, 23:08)

(30) Priority: **15.07.85 GB 8517845**

(43) Date of publication of application: **21.01.87**
**Bulletin 87/4**

(84) Designated Contracting States: **DE FR GB IT**

(71) Applicant: **DU PONT CANADA INC.,**
**Box 2200 Streetsville Postal Station, Mississauga**
**Ontario L5M 2H3 (CA)**

(72) Inventor: **Broadhead, Taras Oscar, 507 - 87 Compton**
**Street, Kingston Ontario K7K 4Z3 (CA)**

(74) Representative: **Ellis, John Clifford Holgate et al,**
**MEWBURN ELLIS & CO. 2/3 Cursitor Street, London**
**EC4A 1BQ (GB)**

(54) Polyethylene compositions of high impact strength.

(57) Polyethylene compositions of high impact strength are disclosed. The compositions comprise 60 to 90% by weight of polyethylene and 10 to 40% by weight of an ethylene copolymer, the latter being in the form of discrete particles in a matrix of the polyethylene. The polyethylene is a homopolymer of ethylene and/or a copolymer of ethylene and at least one $C_4$-$C_{10}$ hydrocarbon alpha-olefin. The polyethylene has a density of at least 0.935 $g/cm^3$ and a melt index of 0.5 to 60 dg/min. The ethylene copolymer is a copolymer of ethylene with a vinyl ester of an aliphatic carboxylic acid or with an alkyl ester of acrylic or methacrylic acid, with a comonomer content of 18 to 40% by weight and a melt index of 2 to 30 dg/min. The polyethylene and ethylene copolymer have similar shear viscosities, as measured at 220°C and 400 $sec^{-1}$. The composition, which has a flexural modulus of at least 550 MPa and a notched Izod impact strength at 23°C of at least 3 times that of the polyethylene in the absence of the ethylene copolymer, and preferably a notched Izod impact strength of greater than 3.2 Joules/cm, may be used in the fabrication of articles e.g. by injection moulding, requiring a high impact strength.

## POLYETHYLENE COMPOSITIONS OF HIGH IMPACT STRENGTH

The present invention relates to polyethylene compositions of high impact strength and especially to compositions of polyethylene with certain ethylene copolymers in which the ethylene copolymers are present as discrete particles within the matrix of polyethylene.

Polyethylene, for example homopolymers of ethylene and copolymers of ethylene and higher alphaolefins, are used in large volumes for a variety of end-uses, e.g. in the form of film, fibres, moulded or thermoformed articles, pipe, coatings and the like. In some instances, the articles fabricated from the polyethylene must exhibit impact-resistant properties; such articles are usually fabricated using injection moulding or thermoforming processes, or the like.

One method of altering the properties of polyethylene is to blend the polyethylene with a second polymer. For instance, it is disclosed in U.K. Patent 582 093 of Imperial Chemical Industries Limited, which was accepted 1946 November 05, that copolymers of ethylene and organic vinyl esters may be incorporated into polyethylene to improve the properties of the polyethylene. Compositions of polyethylene and copolymers of ethylene and vinyl acetate are also disclosed in Canadian Patents 823 715 of H.R. Larson et al., which issued 1969 September 23, and 837 709 of H.P. Holladay et al., which issued 1970 March 24. A process of rotationally moulding objects of high stress crack resistance and compatibility from compositions of high density polyethylene and ethylene/vinyl acetate copolymers is disclosed in U.S. Patent 3 784 668 of W.K. Neidinger, which issued 1974 January 08.

It has now been found that compositions of polyethylene and certain ethylene copolymers exhibit high impact strength.

Accordingly, the present invention provides a melt-fabricable composition comprising a blend of:

(A)  60 to 90% by weight of the composition of a polyethylene selected from the group consisting of homopolymers of ethylene and copolymers of ethylene and at least one $C_4$ - $C_{10}$ hydrocarbon alpha-olefin, and mixtures thereof, said polyethylene having a density of at least 0.935 g/cm$^3$ and a melt index in the range of 0.5 to 60 dg/min., and

(B)  10 to 40% by weight of the composition of an ethylene copolymer selected from the group consisting of copolymers of ethylene with at least one of vinyl esters of aliphatic carboxylic acids, alkyl esters of acrylic acid and alkyl esters of methacrylic acid, said copolymer having a comonomer content of 18 to 40% by weight and a melt index in the range of 2 to 30 dg/min., with the proviso that the shear viscosity of the polyethylene, as measured at 220°C and at a shear rate of 400 sec$^{-1}$, is 0.5 to 2.0 times the shear viscosity of the ethylene copolymer,
the ethylene copolymer being in the form of discrete particles in a matrix of the polyethylene, said particles having an average diameter of 0.1 to 3.0 µm,
said composition having a notched Izod impact strength (as measured by the procedure of ASTM D-256) of at least 3.0 times that of said polyethylene in the absence of ethylene copolymer and a flexural modulus (as measured by the procedure of ASTM D-790) of at least 550 MPa,
said composition having a snake flow in the range of 16 to 40 cm.

In a preferred embodiment of the present invention, the ethylene copolymer is an ethylene/vinyl acetate copolymer.

The present invention also provides a process for forming a melt-fabricable composition comprising the steps of:

(i)  feeding to an extruder

(A)  60 to 90% by weight of the composition of a polyethylene selected from the group consisting of homopolymers of ethylene and copolymers of ethylene and at least one $C_4 - C_{10}$ hydrocarbon alpha-olefin, and mixtures thereof, said polyethylene having a density of at least 0.935 $g/cm^3$ and a melt index in the range of 0.5 to 60 dg/min., and

(B) 10 to 40% by weight of the composition of an ethylene copolymer selected from the group consisting of copolymers of ethylene with at least one of vinyl esters of aliphatic carboxylic acids, alkyl esters of acrylic acid and alkyl esters of methacrylic acid, said copolymer having a comonomer content of 18 to 40% by weight, a melt index in the range of 2 to 30 dg/min., with the proviso that the shear viscosity of the polyethylene, as measured at 220°C and at a shear rate of 400 $sec^{-1}$, is 0.5 to 2.0 times the shear viscosity of the ethylene copolymer,

(ii) intensively mixing the blend so obtained at a temperature in the range of 180 to 260°C to produce a composition that, when cooled to ambient temperature, (a) has the ethylene copolymer in the form of discrete particles in a matrix of polyethylene, said particles having an average mean diameter of 0.1 to 3.0 $\mu m$, (b) has a notched Izod impact strength (as measured by the procedure of ASTM D-256 at 23°C) of at least 3.0 times that of said polyethylene in the absence of ethylene copolymer and a flexural modulus (as measured by the procedure of ASTM D-790) of at least 550 MPa, and (c) has a snake flow in the range of 16 to 40 cm, and

(iii) extruding the molten composition in the form of a shaped article.

In a preferred embodiment of the process of the present invention, the shaped article is in the form of pellets, granules or the like.

The polyethylene of the composition may be a homopolymer of ethylene and/or a copolymer of ethylene and at least one $C_4 - C_{10}$ hydrocarbon alpha-olefin, for example a copolymer of ethylene and a minor amount of butene-1, hexene-1 and/or octene-1. Techniques for the manufacture of such polymers are known in the art; in an embodiment the homopolymers and copolymers are linear polymers manufactured by polymerization of monomer in the presence of a coordination catalyst.

The polyethylene has a density of at least 0.935 $g/cm^3$, especially in the range of 0.935 to 0.965 $g/cm^3$ and in particular in the range of 0.945 to 0.965 $g/cm^3$. In addition, the polyethylene has a melt index in the range of 0.5 to 60 dg/min, especially 10 to 40 dg/min. Melt index is measured by the procedure of ASTM D-1238 (Condition E). The density and melt index of the polyethylene will depend in particular on the intended end-use of articles melt-fabricated from the compositions. If the polyethylene is a polymer of narrow molecular weight distribution, it is preferred that the melt index of the polyethylene be at least 10 dg/min. The compositions contain 60 to 90%, by weight of the composition, of polyethylene, preferably 70 to 85% by weight and especially 75 to 85% by weight of polyethylene. Conversely, the compositions contain 10 to 40%, by weight of the composition, of ethylene copolymer, preferably 15 to 30% and especially 15 to 25% by weight of ethylene copolymer.

The ethylene copolymer of the composition is a copolymer of ethylene with at least one of vinyl esters of aliphatic carboxylic acids, alkyl esters of acrylic acid and alkyl esters of methyacrylic acid. The preferred copolymer is a copolymer of ethylene with vinyl acetate. The copolymers have a comonomer content of 18 to 40% by weight, especially 20 to 30% by weight, and a melt index in the range of 2 to 30 dg/min, especially 5 to 25 dg/min.

The polyethylene and the ethylene copolymer should have shear viscosities that are similar under the melt conditions used, in the extruder, during the formation of the compositions of the present invention. The temperature used in the extruder will normally be in the range of 180 to 260°C and the shear rates in the extruder will normally be about 200 to 600 sec$^{-1}$; as used herein the shear viscosities of the polyethylene and of the ethylene copolymer are measured at a temperature of 220°C and a shear rate of 400 sec$^{-1}$. The ratio of the shear viscosity of the polyethylene to that of the ethylene copolymer should be in the range of 0.5 to 2.0, especially in the range of 0.75 to 1.33 and in particular in the range of 0.9 to 1.11.

In the compositions of the present invention, the ethylene copolymer is in the form of discrete particles in the matrix of the polyethylene. Such particles may be observed in cross-sections of the composition when viewed with, for example, a scanning electron microscope at magnifications of about 5000x or above. The particles of ethylene copolymer have an average mean diameter of 0.1 to 3.0 μm and especially 0.2 to 2.0 μm. As is illustrated hereinafter, compatible blends of polyethylene and ethylene copolymers that do not have discrete particles of ethylene copolymer in a polyethylene matrix, exhibit inferior impact strength as measured by notched Izod impact strength. Notched Izod impact strength is measured by the procedure of ASTM D-256.

In preferred embodiments, the compositions of the present invention have a notched Izod impact strength, as measured at 23°C, of greater than 3.2 Joules/cm and especially greater than 5.0 Joules/cm. Moreover, the notched Izod impact strength of the composition is at least three times that of the polyethylene in the absence of ethylene copolymer in the composition.

In addition, the compositions have a flexural modulus of at least 550 MPa and especially at least 650 MPa.

Flexural modulus is measured by the procedure of ASTM D-790.

The compositions of the invention have a snake flow in the range of 16 to 40 cm. As used herein, snake flow (also known as grid flow number) is determined using an S-shaped flow mould of substantially rectangular cross-section, having a channel depth of 0.1 cm and a channel width of 1.25 cm. The mould has a surface finish of ASA 16 on the fixed side and ASA 4 on the polished cavity. The length of the flow path is measured from the gate of the mould. Steps should be taken to obtain optimal uniformity in the determination of snake flow, especially of temperature of the polymer. The snake flow specimens were moulded using the mould described above and an Engel injection moulding machine at a melt (nozzle) temperature of 220°C using the following cycle: inject and hold (6 seconds), cool (16 seconds), open (1 second) and eject and close (1 second). Snake flow is reported as an average of ten measurements.

The compositions of the present invention may be prepared by feeding the polyethylene and ethylene copolymer to an extruder adapted to intensively mix the resulting blend of polymers. In the extruder, the blend is intensively mixed at a temperature of 180 to 260°C. While it is possible to use a single screw extruder equipped with a mixing screw and a suitable hold-up time, it is preferred that twin screw extruders or other high fluxing mixers be used in the preparation of the compositions of the present invention. The intensively mixed compositions of the present invention are then extruded into shaped articles. The shaped articles will usually be pellets, granules or the like, although other fabricated articles may be made directly from the molten composition. If the compositions are intended for moulding processes, especially injection moulding processes, the compositions would normally be extruded in a comminuted form and subsequently subjected to the moulding process.

The compositions of the present invention may be formed using concentrates. For example, a concentrate of ethylene copolymer in polyethylene having a ratio of polyethylene: ethylene copolymer of at least 4:6 by weight may be prepared e.g. by admixing the polyethylene and ethylene copolymer under melt conditions and extruding the resultant concentrate in the form of pellets or the like. The concentrate is then blended with additional polyethylene to form a composition of the invention. If the compositions are prepared using a concentrate, the melt processing apparatus subsequently used e.g. an extruder, should be capable of mixing the concentrate and polyethylene to form a composition of uniform properties.

The compositions of the invention may additionally contain stabilizers, pigments and other additives known for polyethylene compositions.

The compositions of the present invention may be used in the melt fabrication of articles intended for a variety of end-uses. For instance, the compositions may be injection moulded or rotationally moulded to form articles having a high impact strength. An example of such an article is a grass-catcher, for a lawn mower, where impact resistance to propelled objects is an important property.

The present invention is illustrated by the following examples:

### Example I

Compositions were prepared from SCLAIR* 2909 ethylene homopolymer, having a density of 0.960 g/cm$^3$ and a melt index of 13.5 dg/min, and an ethylene/vinyl acetate copolymer using a Wilmod* single screw extruder. The screw speed used was 100 rpm and melt temperatures were 180 to 220°C. The ethylene copolymer viz. ethylene/vinyl acetate copolymer, had a vinyl acetate content of 25% by weight, a melt index of 19 dg/min and a flexural modulus of 18 MPa. The ratio of shear viscosities, measured at 220°C and 400 sec$^{-1}$, for polyethylene: copolymer was 1.6:1.

\* denotes trade mark

0209294

The resultant compositions were tested as follows:

(a) particle size of the copolymer in the polyethylene matrix was measured with a scanning electron microscope;

(b) notched Izod impact strength was measured at 23°C and -40°C using the procedure of ASTM D-256. The bars used, which were injection moulded at 220°C, had a thickness of 0.32 cm. The letters shown in brackets in Table I hereinafter describe the type of break as follows: C = complete break, H = hinge break, P = partial break, NB = no break;

(c) flexural modulus was measured at 23°C using the procedure of ASTM D-790;

(d) snake flow was measured by the method described above; and

(e) dart drop was measured according to the procedure of ASTM D-3029-82a using a dart having weight of 2724g and a diameter of 2.54 cm. The thickness of the sample used was 0.25 cm. The samples passed the dart drop test when there was no penetration of the dart through the sample.

The results, which are given in Table I, show the improvement obtained with compositions of the present invention. The effect of processing temperature is also shown.

### Example II

The procedure of Example I was repeated using an ethylene/vinyl acetate copolymer having a vinyl acetate content of 28% by weight, a melt index of 6 dg/min and a flexural modulus of 14 MPa. The ratio of the shear viscosities, measured at 220°C and 400 sec$^{-1}$, for polyethylene : copolymer was 1.3:1.

The results obtained are given in Table II, Runs 9 to 12.

### Example III

The procedure of Example I was repeated using an ethylene/vinyl acetate copolymer having a vinyl acetate content of 28% by weight, a melt index of 25 dg/min and a flexural modulus of 10.3 MPa. The ratio of the shear viscosities, measured at 220°C and 400 $sec^{-1}$, for polyethylene : copolymer was 2.6:1.

The results obtained are given in Table II, Runs 13 to 16. These results, especially notched Izod impact strength at 23°C, are inferior to those of Example II thus showing the effect of the more closely matched melt viscosities of the components of the compositions of Example II.

### Example IV

As a comparison, the procedure of Example I was repeated using an ethylene/vinyl acetate copolymer having a vinyl acetate content of 9% by weight, a melt index of 7 dg/min and a flexural modulus of 86 MPa. The ratio of the shear viscosities, measured at 220°C and 400 $sec^{-1}$, for polyethylene : copolymer was 1.5:1.

The results obtained are given in Table III, Runs 17 to 20.

The notched Izod impact strength at 23°C was substantially inferior to that obtained in, for example, Example II in which particles of copolymer were present in the polyethylene matrix.

### Example V

As a further comparison, the procedure of Example I was repeated using an ethylene/vinyl acetate copolymer having a vinyl acetate content of 9% by weight, a melt index of 20 dg/min and a flexural modulus of 130 MPa. The ratio of the shear viscosities, measured at 220°C and 400 $sec^{-1}$, for polyethylene : copolymer was 2.0:1.

The results obtained are given in Table III, Runs 21 to 24.

The notched Izod impact strength at 23°C was inferior to that obtained in, for example, Example II.

### Example VI

To show effects of differences in the mixing of the components of the composition, a composition of 80% by weight of SCLAIR 2909 polyethylene and 20% by weight of the ethylene/vinyl acetate copolymer of Example III was prepared using different mixing equipment. Further details and the results obtained are given in Table IV.

The notched Izod impact strength obtained for compositions prepared on twin screw extruders were superior to those for compositions prepared on a single screw extruder. The composition prepared by physical blending only gave substantially poorer results.

### Example VII

A series of compositions of SCLAIR 2909 polyethylene and the ethylene/vinyl acetate copolymer of Example II were prepared at a melt temperature of 220°C using a twin-screw extruder.

The results in Table V show the effects of composition on the notched Izod impact strength.

TABLE I

| Run No. * | 1 | 2 | 3 | 4 | 5 | 6 | 7 | 8 |
|---|---|---|---|---|---|---|---|---|
| Composition (wt %) | | | | | | | | |
| Polyethylene | 100 | 80 | 80 | 80 | 90 | 80 | 70 | 60 |
| EVA copolymer | - | 20 | 20 | 20 | 10 | 20 | 30 | 40 |
| Melt Temperature (°C) | 220 | 220 | 200 | 180 | 220 | 220 | 220 | 220 |
| Particle Size ( m) | - | 0.7 | 0.5 | 0.3 | NM | 0.4 | NM | NM |
| Notched Izod (Joules/cm) | | | | | | | | |
| 23°C | 0.6(H) | 3.3(P) | 4.3(NB) | 5.0(NB) | 1.2(H) | 5.1(NB) | 6.2(NB) | 6.2(NB) |
| -40°C | 0.7(C) | 1.4(C) | 1.4(C) | 1.0(C) | 0.7(C) | 1.0(C) | 1.3(C) | 11.2(NB) |
| Flexural Modulus (MPa) | 1080 | 720 | 670 | 690 | 830 | 680 | 560 | 420 |
| Snake Flow (cm) | NM | NM | NM | NM | 27.7 | 27.4 | 29.7 | 29.2 |
| Dart Drop (Joules) | 28.5 | 35.2 | 31.4 | 31.3 | NM | NM | NM | NM |

* Runs 1 and 8 are comparative runs; the other Runs are of the invention.

NM = not measured

TABLE II

| Run No. * | 9 | 10 | 11 | 12 | 13 | 14 | 15 | 16 |
|---|---|---|---|---|---|---|---|---|
| Composition (wt %) | | | | | | | | |
| Polyethylene | 90 | 80 | 80 | 70 | 90 | 80 | 80 | 70 |
| EVA copolymer | 10 | 20 | 20 | 30 | 10 | 20 | 20 | 30 |
| Melt Temperature (°C) | 220 | 220 | 220 | 220 | 220 | 220 | 220 | 220 |
| Particle Size ( m) | 0.5 | 0.3-0.4 | NM | NM | NM | 0.5-0.8 | NM | NM |
| Notched Izod (Joules/cm) | | | | | | | | |
| 23°C | 1.6(P) | 5.6(NB) | 5.6(NB) | 6.8(NB) | 1.3(P) | 4.2(NB) | 4.5(NB) | 5.6(NB) |
| -40°C | 0.8(C) | 1.2(P) | 1.4(P) | 10.2(NB) | 0.7(C) | 1.2(P) | 1.2(P) | 10.2(NB) |
| Flexural Modulus (MPa) | 820 | 700 | 700 | 620 | 860 | 710 | 650 | 570 |
| Snake Flow (cm) | 25.9 | 26.4 | 26.2 | NM | NM | 28.2 | 27.7 | 29.2 |
| Dart Drop (Joules) | 30.5 | 36.2 | 37.3 | 38.6 | 30.5 | 34.6 | 32.1 | 38.6 |

* Runs 9 and 13 are comparative runs; the other Runs are of the invention.

NM = not measured.

TABLE III

| Run No. * | 17 | 18 | 19 | 20 | 21 | 22 | 23 | 24 |
|---|---|---|---|---|---|---|---|---|
| Composition (wt %) | | | | | | | | |
| Polyethylene | 90 | 80 | 80 | 70 | 90 | 80 | 80 | 70 |
| EVA copolymer | 10 | 20 | 20 | 30 | 10 | 20 | 20 | 30 |
| Melt Temperature (°C) | 220 | 220 | 220 | 220 | 220 | 220 | 220 | 220 |
| Particle Size ( m) | - | - | - | - | - | - | - | - |
| Notched Izod (Joules/cm) | | | | | | | | |
| 23°C | 0.7(P) | 1.5(P) | 1.3(P) | 4.8(NB) | 0.6(P) | 0.6(H) | 0.7(P) | 1.0(P) |
| -40°C | 0.7(C) | 0.7(C) | 0.8(C) | 1.3(C) | 0.7(C) | 0.7(C) | 0.7(C) | 0.8(C) |
| Flexural Modulus (MPa) | 810 | 730 | 690 | 600 | 950 | 770 | 740 | 670 |
| Snake Flow (cm) | 26.2 | 25.9 | 26.2 | 26.4 | 26.4 | NM | 26.7 | 27.2 |
| Dart Drop (Joules) | 30.5 | 32.1 | 29.7 | 29.7 | 26.4 | 30.5 | 27.7 | 32.1 |

* NM = not measured.

The compositions did not have discrete particles of ethylene copolymer in the polyethylene matrix.

TABLE IV

| Run No. * | 25 | 26 | 27 | 28 |
|---|---|---|---|---|
| Extruder* | twin-screw | twin-screw | single-screw | (blend) |
| Screw Speed(rpm) | 150 | 330 | 150 | – |
| Melt Temperature (°C) | 200 | 220 | 220 | 218 |
| Notched Izod (Joules/cm) | | | | |
| 23°C | 6.5(NB) | 6.0(NB) | 5.6(NB) | 4.0(P) |
| -40°C | 1.1 | 1.5 | 1.2 | 1.2 |

\* In Run 25, the extruder was a Werner and Pfleiderer** twin-screw extruder.

In Run 26, the extruder was a Welding Engineers, Inc., Blue Bell, PA, U.S.A., twin screw extruder

In Run 27, the extruder was a Wilmod** single screw extruder.

In Run 28, an extruder was not used; a physical blend of ground polyethylene and ethylene copolymer was used.

\*\* denotes trade mark

## TABLE V

| Run No. * | 29 | 30 | 31 | 32 | 33 | 34 |
|---|---|---|---|---|---|---|
| Composition (wt %) | | | | | | |
| Polyethylene | 80 | 82 | 84 | 79.2 | 100 | 80 |
| EVA copolymer | 20 | 18 | 16 | 19.8 | - | 20 |
| Notched Izod (Joules/cm) | | | | | | |
| 23°C | 6.0 | 5.4 | 4.6 | 4.9 | 0.6 | 4.0 |
| -40°C | 1.6 | 1.3 | 1.3 | 1.5 | 0.6 | 1.2 |
| Flexural Modulus (MPa) | 790 | 722 | 750 | 778 | 1059 | 727 |
| Snake Flow (cm) | 26.9 | 26.9 | 27.2 | 26.7 | 25.9 | NM |

* NM = not measured

In Run 32, the composition also contained 1% by weight of magnesium hydroxide

Runs 33 and 34 are comparison runs; Run 34 is identical to Run 28. In the latter the composition used was a physical blend of ground polyethylene and ethylene copolymer.

## Example VIII

A series of compositions were prepared using polyethylenes having the same density but different melt flow properties. All of the polyethylenes used were homopolymers of ethylene, except SCLAIR 2915 which contained a minor amount of butene-1 comonomer. The ethylene copolymer was ethylene/vinyl acetate copolymer; the ethylene copolymer was varied in order to more closely match the melt viscosities of the polyethylene and the copolymer.

The polymers used were as follows:

(a) Polyethylene

SCLAIR 2907 ....     density 0.960 g/cm$^3$,     melt index  5.0   dg/min
SCLAIR 2909 ....     density 0.960 g/cm$^3$,     melt index 12.5   dg/min
SCLAIR 2912 ....     density 0.960 g/cm$^3$,     melt index 30.1   dg/min
SCLAIR 2915 ....     density 0.959 g/cm$^3$,     melt index 65.0   dg/min

(b) Ethylene Copolymer

A .... density 0.951 g/cm$^3$, melt index 3.0 dg/min,  28% vinyl acetate
B .... density 0.955 g/cm$^3$, melt index 6.0 dg/min,  28% vinyl acetate
C .... density 0.948 g/cm$^3$, melt index 19 dg/min,  25% vinyl acetate
D .... density 0.957 g/cm$^3$, melt index 43 dg/min,  33% vinyl acetate

Further details and the results obtained are given in Table VI.

TABLE VI

| Run No.* | Polyethylene Type (%) | Ethylene Copolymer Type (%) | Shear Visc. Ratio | Flexual Modulus (MPa) | Notched Izod (Joules/cm) 23°C | -40°C | Snake Flow (cm) |
|---|---|---|---|---|---|---|---|
| 35 | 2907 (100) | - | - | 965 | 1.12(H) | 0.91(H) | 21.3 |
| 36 | 2907 (90) | A (10) | 1.33 | 832 | 5.34(NB) | 0.85(C) | 21.1 |
| 37 | 2907 (80) | A (20) | 1.33 | 656 | 6.99(NB) | 2.62(H) | 21.3 |
| 38 | 2907 (70) | A (30) | 1.33 | 556 | 6.99(NB) | 10.36(NB) | 21.3 |
| 39 | 2909 (90) | B (10) | 1.36 | 812 | 1.28(P) | 0.64(C) | 26.7 |
| 40 | 2909 (80) | B (20) | 1.36 | 703 | 5.07(NB) | 0.91(C) | 26.9 |
| 41 | 2909 (70) | B (30) | 1.36 | 585 | 6.67(NB) | 9.45(NB) | 26.9 |
| 42 | 2912 (100) | - | - | 997 | 0.32(C) | 0.37(C) | 34.0 |
| 43 | 2912 (90) | C (10) | NA | 915 | 0.37(C) | 0.43(C) | 34.3 |
| 44 | 2912 (80) | C (20) | NA | 679 | 0.91(H) | 0.64(C) | 34.3 |
| 45 | 2912 (70) | C (30) | NA | 551 | 1.76(P) | 0.69(C) | 34.3 |
| 46 | 2915 (100) | - | - | 928 | 0.27(C) | 0.32(C) | 41.1 |
| 47 | 2915 (90) | D (10) | 0.88 | 758 | 0.32(C) | 0.43(C) | 41.4 |
| 48 | 2915 (80) | D (20) | 0.88 | 625 | 0.48(H) | 0.53(C) | 42.7 |
| 49 | 2915 (70) | D (30) | 0.88 | 546 | 0.91(H) | 0.64(C) | 42.7 |

* Runs 46-49 are comparative runs, because of ethylene copolymer melt index.
NA = not available, but constant snake flow values, with changing ethylene copolymer content, indicates that shear viscosities were similar.

## Example IX

A series of compositions were prepared using polyethylenes having different densities but the same melt flow properties. viz. all of the polyethylenes were classified as having snake flows of 17.8 cm.

The polyethylenes used were as follows:

SCLAIR 2912 .... density 0.960 g/cm$^3$, melt index 30 dg/min
SCLAIR 2712 .... density 0.950 g/cm$^3$, melt index 33 dg/min
SCLAIR 2512 .... density 0.940 g/cm$^3$, melt index 31 dg/min

The ethylene copolymer was copolymer C of Example VIII.

The results for SCLAIR 2712 and 2512 are reported in Table VII, and the results for SCLAIR 2912 are reported as Runs 42-45 in Table VI. The shear viscosities of the polyethylene and ethylene copolymer are believed to be similar.

TABLE VII

| Run No.* | Polyethylene Type (%) | Ethylene Copolymer (%) | Flexual Modulus (MPa) | Notched Izod (Joules/cm) 23°C | −40°C | Snake Flow (cm) |
|---|---|---|---|---|---|---|
| 50 | 2712 (100) | 0 | 725 | 0.37(C) | 0.48(C) | 35.3 |
| 51 | 2712 (90) | 10 | 605 | 0.43(P) | 0.53(C) | 34.8 |
| 52 | 2712 (80) | 20 | 485 | 0.85(H) | 0.75(C) | 35.3 |
| 53 | 2712 (70) | 30 | 428 | 2.19(P) | 1.28(C) | 35.8 |
| 54 | 2512 (100) | 0 | 528 | 0.53(C) | 0.64(C) | 33.8 |
| 55 | 2512 (90) | 10 | 454 | 0.69(C) | 0.75(C) | 34.0 |
| 56 | 2512 (80) | 20 | 380 | 1.71(H) | 1.07(C) | 34.3 |
| 57 | 2512 (70) | 30 | 375 | 3.42(NB) | 6.30(NB) | 35.1 |

This example illustrates the effect of ethylene/vinyl acetate copolymer on the properties of polyethylenes of relatively high melt index and relatively low density.

0209294

## Example X

A concentrate of SCLAIR 2909 polyethylene (60% by weight) and ethylene/vinyl acetate copolymer (40% by weight) was prepared using a Welding Engineers twin-screw extruder; the ethylene copolymer was copolymer B of Example VIII. The resultant concentrate, in pellet form, was blended in a ratio of 1:1 with additional SCLAIR 2909 polyethylene.

As a comparison, a composition containing SCLAIR 2909 polyethylene (80% by weight) and ethylene/vinyl acetate copolymer (20% by weight) i.e. the same as the composition above after blending, was prepared using the Welding Engineers twin-screw extruder.

Notched Izod impact strength and flexural modulus were measured on the blend and on the composition. The results obtained were as follows:

| Run No. | Sample | Notched Izod (Joules/cm) 23°C | -40°C | Flexural Modulus (MPa) |
|---------|--------|-------|-------|------------------------|
| 58 | Blend | 5.3 | 0.64 | 715 |
| 59 | Composition | 5.6 | 0.53 | 718 |

The properties of the blend and composition are believed to be equivalent within experimental error, thereby illustrating that compositions of the invention may be prepared from concentrates.

## Example XI

A series of compositions of the invention were prepared by blending SCLAIR 2909 polyethylene with ethylene/-methyl acrylate copolymer that contained 20% of methyl acrylate comonomer; the copolymer had a density of 0.942 $g/cm^3$ and a melt index of 6 dg/min. The compositions were prepared by blending the polyethylene and ethylene copolymer viz. ethylene/methyl acrylate copolymer, in a Welding Engineers twin-screw extruder at melt temperatures of 220°C or 250°C.

Further details and the results obtained are shown in Table VIII.

TABLE VIII

| Run No. | Polyethylene (%) | Ethylene Copolymer (%) | Blending Temperature (°) | Flexual Modulus (MPa) | Notched Izod (Joules/cm) | |
|---|---|---|---|---|---|---|
| | | | | | 23°C | −40°C |
| 60 | 100 | 0 | - | 1069 | 0.59 | 0.59 |
| 61 | 90 | 10 | 220 | 814 | 1.33 | 0.69 |
| 62 | 90 | 10 | 250 | 832 | 1.92 | 0.64 |
| 63 | 80 | 20 | 220 | 670 | 5.39 | 0.96 |
| 64 | 80 | 20 | 250 | 699 | 6.19 | 0.91 |
| 65 | 70 | 30 | 220 | 532 | 6.35 | 10.1 |
| 66 | 70 | 30 | 250 | 521 | 6.72 | 11.0 |

The results obtained using a melt temperature of 250°C tended to be superior to those obtained at a melt temperature of 220°C, possibly due to a better match of melt viscosities at 250°C.

It was shown by scanning election microscopy that compositions containing 20% by weight of ethylene/methyl acrylate copolymer had particles of the ethylene copolymer in the matrix of polyethylene. The particles had a diameter of about 1 micron, or less.

## Example XII

A series of ethylene/vinyl acetate copolymers, having different amounts of vinyl acetate comonomer, were blended into SCLAIR 2909 polyethylene. Each blend contained 80% by weight of polyethylene and 20% by weight of ethylene copolymer.

The resultant compositions were subjected to flexural modulus and notched Izod impact tests and also studied using a scanning electron microscope. The results obtained were as follows:

| Run No. | Vinyl Acetate (%) | Shear Visc. Ratio | Flexual Modulus (MPa) | Notched Izod (Joules/cm) | |
|---|---|---|---|---|---|
| | | | | 23°C | -40°C |
| 67 | 0 | - | 833 | 0.76(P) | 0.83(C) |
| 68 | 9 | 1.5 | 512 | 2.00(P) | 0.83(C) |
| 69 | 12 | NA | 500 | 2.69(P) | 0.97(C) |
| 70 | 15 | NA | 497 | 4.90(P) | 0.97(C) |
| 71 | 18 | NA | NM | 5.93(NB) | 1.10(C) |
| 72 | 25 | 1.6 | 475 | 5.38(NB) | 1.03(H) |
| 73 | 28 | 1.3 | 492 | 7.79(NB) | 1.45(P) |

The results showed that compositions formed from copolymers having 18-28% vinyl acetate copolymer had notched Izod impact strengths at 23°C that were significantly superior to the compositions containing 0% i.e. polyethylene control, or 9 or 12% vinyl acetate copolymer. The composition having the 15% vinyl acetate copolymer exhibited a notched Izod impact strength superior to compositions of lower vinyl acetate content but inferior to compositions of higher vinyl acetate content, and is believed to represent the transition zone between these two types of compositions.

The scanning electron microscope showed significant differences in the compositions. Compositions formed with copolymers having 18-28% vinyl acetate copolymer showed particles of ethylene copolymer in the polyethylene matrix whereas compositions with 9 and 12% vinyl acetate copolymer did not. The composition with 15% vinyl acetate copolymer

0209294

did not appear to have particles of ethylene copolymer in the polyethylene matrix but the micrographs obtained from the scanning electron microscope were different in appearance to those obtained with the compositions of lower vinyl acetate content; this may be evidence of a transition zone in the structure of the composition.

### Example XIII

Using the procedure of Run 25 of Example VI, compositions of SCLAIR 2906M6 polyethylene and an ethylene/-vinyl acetate copolymer having a density of 0.951 $g/cm^3$, a melt index of 3.0 dg/min and a vinyl acetate content of 28% by weight were prepared. The polyethylene had a density of 0.960 $g/cm^3$, a melt index of 0.75 dg/min, a snake flow of 15.2 cm and a broad molecular weight distribution.

Further details and the results obtained were as follows:

| Run No. | Polyethylene (%) | Ethylene Copolymer (%) | Flexual Modulus (MPa) | Notched Izod (Joules/cm) | |
|---|---|---|---|---|---|
| | | | | 23°C | -40°C |
| 74 | 100 | 0 | 1038 | 4.7(P) | 2.5(P) |
| 75 | 85 | 15 | 724 | 8.0(NB) | 2.9(P) |
| 76 | 77 | 23 | 598 | 8.6(NB) | 10.8(NB) |

This example illustrates compositions of the invention (Runs 75 and 76) prepared using a polyethylene of broad molecular weight distribution.

CLAIMS:

1. A melt-fabricable composition comprising a blend of:

(A) 60 to 90% by weight of the composition of a polyethylene selected from the group consisting of homopolymers of ethylene and copolymers of ethylene and at least one $C_4-C_{10}$ hydrocarbon alpha-olefin, and mixtures thereof, said polyethylene having a density of at least 0.935 $g/cm^3$ and a melt index in the range of 0.5 to 60 dg/min., and

(B) 10 to 40% by weight of the composition of an ethylene copolymer selected from the group consisting of copolymers of ethylene with at least one of vinyl esters of aliphatic carboxylic acids, alkyl esters of acrylic acid and alkyl esters of methacrylic acid, said copolymer having a comonomer content of 18 to 40% by weight and a melt index in the range of 2 to 30 dg/min.,with the proviso that the shear viscosity of the polyethylene, as measured at 220°C and at a shear rate of 400 $sec^{-1}$, is 0.5 to 2.0 times the shear viscosity of the ethylene copolymer,the ethylene copolymer being in the form of discrete particles in a matrix of the polyethylene, said particles having an average diameter of 0.1 to 3.0 µm, said composition having a notched Izod impact strength (as measured by the procedure of ASTM D-256) at 23°C of at least 3.0 times that of said polyethylene in the absence of ethylene copolymer, and a flexural modulus (as measured by the procedure of ASTM D-790) of at least 550MPa,said composition having a snake flow in the range of 16 to 40 cm.

2. The composition of Claim 1 in which the ethylene copolymer comprises 15 to 30% by weight of the composition.

3. The composition of Claim 1 or Claim 2 in which the melt index of the polyethylene is in the range of 10 to 40 dg/min.

4. The composition of any one of Claims 1-3 in which the comonomer content of the ethylene copolymer is in the range of 20 to 30% by weight.

5. The composition of any one of Claims 1-4 in which the shear viscosity of the polyethylene is 0.75 to 1.33 times that of the ethylene copolymer.

6. The composition of any one of Claims 1-5 in which the particles of ethylene copolymer in the matrix of polyethylene have an average diameter of 0.2 to 2.0 µm.

7. The composition of any one of Claims 1-6 in which the composition has a notched Izod impact strength at 23°C of at least 3.2 Joules/cm.

8. The composition of any one of Claims 1-7 in which the composition has a flexural modulus of at least 650 MPa.

9. The composition of any one of Claims 1-8 in which the composition has a notched Izod impact strength at 23°C of at least 5 Joules/cm.

10. The composition of any one of Claims 1-9 in which the ethylene copolymer has a melt index in the range of 5 to 25 dg/min.

11. The composition of any one of Claims 1-10 in which the ethylene copolymer is ethylene/vinyl acetate copolymer.

12.   The composition of any one of Claims 1-10 in which the ethylene copolymer is ethylene/alkyl methacrylate copolymer.

13.   A process for forming a melt-fabricable composition comprising the steps of:

(i)   feeding to an extruder

(A)   60 to 90% by weight of the composition of a polyethylene selected from the group consisting of homopolymers of ethylene and copolymers of ethylene and at least one $C_4-C_{10}$ hydrocarbon alpha-olefin, and mixtures thereof, said polyethylene having a density of at least 0.935 $g/cm^3$ and a melt index in the range of 0.5 to 60 dg/min., and

(B)   10 to 40% by weight of the composition of an ethylene copolymer selected from the group consisting of copolymers of ethylene with at least one of vinyl esters of aliphatic carboxylic acids, alkyl esters of acrylic acid and alkyl esters of methacrylic acid, said copolymer having a comonomer content of 18 to 40% by weight and a melt index in the range of 2 to 30 dg/min.,with the proviso that the shear viscosity of the polyethylene, as measured at 220°C and at a shear rate of 400 $sec^{-1}$, is 0.5 to 2.0 times the shear viscosity of the ethylene copolymer,

(ii)   intensively mixing the blend so obtained at a temperature in the range of 180 to 260°C to produce a composition that, when cooled to ambient temperature, (a) has the ethylene copolymer in the form of discrete particles in a matrix of the polyethylene, said particles having an average diameter of 0.1 to 3.0 µm, (b) has a notched Izod impact strength (as measured by the procedure of ASTM D-256, at 23°C of at least 3.0 times that of said polyethylene in the absence of ethylene copolymer, and a flexural modulus (as measured by the procedure of ASTM D-790) of at least 550MPa, and (c) has a snake flow in the range of 16 to 40 cm, and

(iii) extruding the molten composition thus obtained.

14. The process of Claim 13 in which the ethylene copolymer comprises 15 to 30% by weight of the composition.

15. The process of Claim 13 or Claim 14 in which the melt index of the polyethylene is in the range of 10 to 40 dg/min.

16. The process of any one of Claims 13-15 in which the comonomer content of the ethylene copolymer is in the range of 20 to 30% by weight.

17. The process of any one of Claims 13-16 in which the shear viscosity of the polyethylene is 0.75 to 1.33 times that of the ethylene copolymer.

18. The process of any one of Claims 13-17 in which, in the resultant composition, the particles of ethylene copolymer in the matrix of polyethylene have an average diameter of 0.2 to 2.0 $\mu$m.

19. The process of any one of Claims 13-18 in which the resultant composition has a notched Izod impact strength at 23°C of at least 3.2 Joules/cm.

20. The process of any one of Claims 13-19 in which the resultant composition has a flexural modulus of at least 650 MPa.

0209294

21. The process of any one of Claims 13-20 in which part of the composition fed to the extruder is in the form of a concentrate of said polyethylene and said ethylene copolymer, said concentrate having a ratio of polyethylene to ethylene copolymer of at least 4:6 by weight.

22. The process of any one of Claims 13-21 in which the composition so obtained has a notched Izod impact strength at 23°C of at least 5 Joules/cm.

23. The process of any one of Claims 13-22 in which the ethylene copolymer has a melt index in the range of 5 to 25 dg/min.

24. The process of any one of Claims 13-23 in which the ethylene copolymer is ethylene/vinyl acetate copolymer.

25. The process of any one of Claims 13-23 in which the ethylene copolymer is ethylene/alkyl methacrylate copolymer.